# EUROPÄISCHE PATENTSCHRIFT

(11) **EP 2 483 049 B1**
(45) Veröffentlichungstag und Bekanntmachung des Hinweises auf die Patenterteilung: **27.04.2016**
(21) Anmeldenummer: 10770987.5
(22) Anmeldetag: 29.09.2010
(51) Int. Cl.: B29C 45/14, B29C 45/56, B29C 33/18

(54) **IMD-FORM, SPRITZGUSSVORRICHTUNG MIT EINER SOLCHEN IMD-FORM SOWIE VERFAHREN ZUR HERSTELLUNG EINES FOLIENDEKORIERTEN KUNSTSTOFFTEILS**
IMD MOLD, INJECTION MOLDING APPARATUS HAVING SUCH AN IMD MOLD AND METHOD FOR PRODUCING A FOIL-DECORATED PLASTIC PART
MOULE POUR DÉCORATION DANS LE MOULE (IMD), DISPOSITIF DE MOULAGE PAR INJECTION COMPORTANT UN MOULE IMD DE CE TYPE ET PROCÉDÉ DE FABRICATION D'UNE PIÈCE EN PLASTIQUE DOTÉE D'UNE DÉCORATION SUR FILM

(30) Priorität: 30.09.2009 DE 102009043581
(43) Veröffentlichungstag der Anmeldung: 08.08.2012
(73) Patentinhaber: HBW-Gubesch Kunststoff-Engineering GmbH, 91448 Emskirchen (DE)
(72) Erfinder: REICHART, Marc, 90471 Nürnberg (DE); GUBESCH, Werner, 90579 Langenzenn (DE)
(74) Vertreter: FDST Patentanwälte
(86) Internationale Anmeldenummer: PCT/EP2010/005937
(87) Internationale Veröffentlichungsnummer: WO 2011/038895

(56) Entgegenhaltungen:
- JP-A- 3 124 416
- JP-A- 3 236 920
- JP-A- 5 024 070
- JP-A- 63 139 717
- JP-A- 2000 006 199
- JP-A- 2009 279 849

## Beschreibung

Die Erfindung betrifft eine IMD-Form zur Herstellung eines foliendekorierten Kunststoffteils, umfassend eine folienzugewandte Halbform sowie eine folienabgewandte Halbform, wobei die beiden Halbformen mit korrespondierenden Formtrennungsflächen derart aneinander anlegbar sind, dass sie zwischen sich eine nach außen abgeschlossene Kavität bilden. Eine derartige IMD-Form ist beispielsweise aus der DE 10 2007 007 409 A1 bekannt. Die Erfindung betrifft weiterhin eine Spritzgussvorrichtung mit einer solchen IMD-Form sowie ein Verfahren zur Herstellung eines foliendekorierten Kunststoffteils mit Hilfe einer derartigen Spritzgussvorrichtung.

Foliendekorierte Kunststoffteile werden in der Regel als Spritzgussteile hergestellt, die mit einer Dekorationslackschicht versehen sind, wobei die letztere eine reliefartige Oberflächenstruktur aufweisen kann. Die Aufbringung der Lackschicht erfolgt z.B. über die so genannte In-Mold-Decoration (IMD)-Technik. Bei der IMD-Technik wird die Lackschicht zunächst auf eine abziehbare, flache Trägerfolie aufgebracht. Die Trägerfolie mit der Lackschicht wird im Folgenden einfach Folie genannt. Die Folie wird in die offene IMD-Form eingelegt, so dass die Lackschicht nach innen zu der folienabgewandten Halbform weist. Beim Schließen der IMDForm wird die Folie im Bereich der aneinander liegenden Formtrennungsflächen zwischen den beiden Halbformen der IMD-Form eingespannt. Die Folie wird nun mit Kunststoff hinterspritzt, wobei sie unter dem von der Kunststoffschmelze ausgeübten Spritzdruck gegen die folienzugewandte Halbform gedrückt wird. Die Folie wird hierbei gedehnt (verstreckt). Beim Spritzgussprozess verbindet sich die Lackschicht mit der erkaltenden Kunststoffmasse. Bei oder nach dem Öffnen der IMD-Form (Ausformen) wird die Trägerfolie von der Lackschicht, die nun die Sichtfläche des Spritzgussartikels bildet, abgezogen.

Alternativ zur IMD-Technik existiert das so genannte Insert-Molding. Beim InsertMolding wird die Lackschicht auf eine im Vergleich zu IMD-Folien wesentlich dickere und daher bedingt formstabile Insert-Folie aufgebracht. Die mit der Lackschicht versehene Insert-Folie wird thermisch verformt, geschnitten und mit Kunststoff hinterspritzt. Die Insert-Folie befindet sich dabei im fertigen Spritzgussteil sandwichartig zwischen der Lackschicht und dem Kunststoffkörper.

Ein Nachteil der herkömmlichen IMD-Technik ist, dass IMD-Folien nur in vergleichsweise geringem Umfang, typischerweise bis zu ca. 30%, verstreckbar sind. Kunststoffteile mit einer starken 3D-Strukturierung der Sichtfläche können daher nicht in IMD-Technik dekoriert werden, zumal die Folie in solchen Fällen zu Faltenbildung neigt oder gar reißt. Mit Insert-Molding sind zwar grundsätzlich auch vergleichsweise stark konturierte Artikel dekorierbar. Diese Technik ist jedoch wesentlich teurer als das IMD-Verfahren.

Aus JP 63 139 717 A ist eine IMD-Form bekannt, deren folienabgewandte Halbform bei geschlossener Form mit einem Vorsprung teilweise und passgenau in eine korrespondierende Aushöhlung der folienzugewandten Halbform eintaucht. Die Formtrennungsfläche der folienzugewandten Halbform weist hierdurch einen Außenbereich und einen davon abknickenden Innenbereich auf. Der Außenbereich definiert hierbei eine flache Formtrennungsebene, gegenüber der der Innenbereich zurückversetzt ist. An der folienzugewandten Halbform geht der Innenbereich der Formtrennungsfläche übergangslos (d.h. glatt) in die Wand der Kavität über. Eine ähnliche IMD-Form ist aus JP 03 124 416 A bekannt.

Aus JP 2000 006 199 und JP 05 24 070 A ist jeweils eine weitere IMD-Form bekannt. Bei diesen Formen hat die an der folienzugewandten Halbform ausgebildete Formtrennungsfläche einen Außenbereich, der eine flache Formtrennungsebene definiert und einen Innenbereich, der gegenüber der Formtrennungsebene zurückversetzt ist. Der Innenbereich der Formtrennungsfläche ist hierbei konkav (wannenartig) eingewölbt, so dass die Formtrennungsfläche hier im Querschnitt etwa einen viertelkreisförmigen Verlauf nimmt. Hierdurch stößt der Innenbereich der Formtrennungsfläche sowohl nach außen hin als auch nach innen hin etwa rechtwinklig an die angrenzenden Oberflächen der folienzugewandten Halbform, nämlich auf den Außenbereich der Formtrennungsfläche bzw. auf die Wand der Kavität. JP 2000006 199 offenbart eine IMD-Form gemäß dem Oberbegrift des Anspruchs 1.

Aus JP 03 236 920 A und JP 2009 279 849 sind eine Insert-Molding-Form bzw. eine Druckgussform bekannt. Jeweils eine Halbform der bekannten Formen ist aus einem inneren Teil und einem dieses umgebenden äußeren Teil gebildet, wobei ein Innenbereich einer Formtrennung an dem inneren Teil und ein Außenbereich der Formtrennung an dem äußeren Teil gebildet ist. Das äußere Teil ist dabei gegenüber dem inneren Teil verschiebbar.

Der Erfindung liegt die Aufgabe zugrunde, eine verbesserte Herstellung von foliendekorierten Kunststoffteilen mit stark konturierten Oberflächen mittels der IMD-Technik zu ermöglichen.

Die Aufgabe wird erfindungsgemäß gelöst durch eine IMD-Form zur Herstellung eines foliendekorierten Kunststoffteils, gemäß den Merkmalen des Anspruchs 1 oder gemäß den Merkmalen des Anspruchs 4.
Als "folienzugewandt" ist hierbei diejenige Halbform bezeichnet, an die die IMDFolie bestimmungsgemäß vor oder während des Einspritzvorgangs angelegt wird. Die dieser Halbform zugeordnete Seite der IMD-Form ist nachfolgend auch als "Ausformseite" bezeichnet. Als "folienabgewandt" ist dagegen diejenige Halbform bezeichnet, von der aus die IMD-Folie hinterspritzt wird. Die dieser Halbform zugeordnete Seite der IMD-Form ist daher auch als "Einspritzseite" bezeichnet.

In einer ersten Variante der erfindungsgemäßen IMD-Form ist die Formtrennungsfläche der folienzugewandten Halbform in ihrem Innenbereich gegenüber der Formtrennungsebene zurückversetzt. Erfindungsgemäß bildet der Innenbereich der Formtrennungsfläche hierbei einen im Querschnitt schräg-gerade zur Formtrennungsebene angestellten Kragen, dessen Innenrand stumpfwinklig in die Wand der Kavität übergeht.

"Zurückversetzt" ist die Formtrennungsfläche im Innenbereich insbesondere beiaufgrund ihrer Einfachheit bevorzugten - Ausführungen der erfindungsgemäßen IMD-Form, bei denen die folienzugewandte Halbform zumindest im Bereich der Formtrennungsfläche eine starre Einheit bildet. In diesem Fall hat die folienabgewandte Halbform eine komplementär gestaltete Formtrennungsfläche mit einem Außenbereich und einem über diesen vorstehenden Innenbereich.

in einer zweiten Variante der erfindungsgemäßen IMD-Form ist die Formtrennungsfläche der folienzugewandten Halbform in ihrem Innenbereich gegenüber dieser Formtrennungsebene zurückversetzbar. Die folienzugewandte Halbform ist in diesem Fall mehrteilig aufgebaut, so dass der Innenbereich und der Außenbereich der Formtrennungsfläche (oder zumindest ein Teil des letzteren) an verschiedenen Teilen dieser Halbform ausgebildet sind. Die beiden Teile sind hierbei derart gegeneinander beweglich, dass der Innenbereich der Formtrennungsfläche gegenüber dem Außenbereich verschiebbar ist.

Die Aufgabe wird weiterhin erfindungsgemäß gelöst durch eine Spritzgussvorrichtung mit einer derartigen IMD-Form, mit Mitteln zum Verfahren der Form in einer Verfahrrichtung zwischen einer geschlossenen Stellung und einer offenen Stellung sowie mit Mitteln zum Einlegen einer IMD-Folie zwischen die Halbformen.

Zudem wird die Aufgabe gelöst durch ein Verfahren zur Herstellung eines foliendekorierten Kunststoffteils, bei dem erfindungsgemäß eine solche Spritzgussvorrichtung herangezogen wird.

Durch beide vorstehend beschriebene Ausgestaltungsvarianten der IMD-Form wird erreicht, dass die IMD-Folie beim Einlegen in die IMD-Form zunächst nur auf dem Außenbereich der Formtrennungsfläche, der folienzugewandten Halbform aufliegt, während sie den Innenbereich dieser Formtrennungsfläche frei überspannt. Über die gesamte vom Außenbereich umschlossene Fläche, somit über eine Fläche, die den Querschnitt der Kavität übersteigt, kann sich die Folie daher frei dehnen, wodurch lokale Überdehnungen mit der Folge einer Riss- oder Faltenbildung effektiv vermieden werden. Von besonderem Vorteil ist dies bei Varianten des Spritzgussverfahrens, bei denen die Folie vor dem Schließen der Form beheizt und/oder - insbesondere durch Unterdruck - in die folienzugewandte Halbform gezogen wird.

Entsprechend ist im Rahmen der erfindungsgemäßen Spritzgussvorrichtung vorzugsweise eine Heizvorrichtung, insbesondere in Form eines Infrarot (IR)Strahlers oder eines Heißluftgebläses vorgesehen, die in der offenen Stellung der Form zur Beheizung der Folie zwischen die Halbformen verfahren werden kann.

Zusätzlich oder alternativ hierzu weisen die Form und/oder die Spritzgussvorrichtung Mittel zur Erzeugung eines Unterdrucks zwischen der folienzugewandten Halbform und der IMD-Folie auf. Seitens der Form sind diese Mittel insbesondere durch Vakuumkanäle gebildet, die in die Kavitätswand oder deren Umgebung, und in diesem Fall insbesondere in den Innenbereich der Formtrennungsflächen, münden. Als "Unterdruck" ist hierbei allgemein eine negative Druckdifferenz zwischen dem ausformseitigen Folienseite und der einspritzseitigen Folienseite bezeichnet. Vorzugsweise wird dieser Unterdruck durch Erzeugung eines Vakuums, also eines gegenüber dem Atmosphärendruck erniedrigten Drucks, erzeugt. Der Unterdruck kann alternativ oder zusätzlich aber auch durch Applikation eines gegenüber dem Atmosphärendruck erhöhten Luftdrucks auf die einspritzseitige Folienseite erzeugt werden. Die Applikation eines solchen Überdrucks von der Einspritzseite ist insbesondere bei stark konturierten Kavitätsoberflächen vorteilhaft für eine exakte Anlage der Folie an die ausformseitige Kavitätswand, zumal durch Überdruckapplikation - anders bei reiner Vakuumerzeugung - Druckdifferenzen erzeugbar sind, die den Atmosphärendruck wesentlich übersteigen.

In Verbindung mit einer Beheizung der Folie hat die erfindungsgemäße Ausgestaltung der IMD-Form insbesondere den Vorteil, dass die sowohl die Kavität als auch den Innenbereich der Formtrennungsfläche frei überspannende Folie in diesem gesamten Flächenbereich auf Temperaturen erhitzt werden, die die Formtemperatur (in der Regel ca. 70°C) wesentlich überschreiten. Die in die Form eingelegte Folie kommt nämlich zunächst nur mit dem Außenbereich der Formtrennungsflächen in Berührung, so dass eine Wärmeableitung aus der Folie in die Form auch nur in diesem Bereich auftritt. Innerhalb der vom Außenbereich der Formtrennungsfläche umschlossenen Fläche behält die Folie aufgrund der fehlenden Wärmekopplung mit der Form diese erhöhte Temperatur auch besonders lange bei, insbesondere bis zum Verstrecken der Folie. Die temperaturbedingt erhöhte Plastizität der Folie reduziert dabei weiter das Risiko einer Falten- oder Rissbildung.

Beim Tiefziehen der Folie erfolgt eine besonders gleichmäßige Verstreckung der Folie überden gesamten vom Außenrand des Kragens umschlossenen Wandbereich der ausformseitigen Halbform. Somit wird-im Vergleich zu herkömmlichen IMD-Formen, bei denen die Folie im Wesentlichen ausschließlich im Bereich der Kavität verstreckt wird - bei gegebener Konturierung der Oberfläche der Kavität die lokale Verstreckung der Folie pro Flächeneinheit signifikant reduziert. Hierdurch wird ebenfalls das Risiko einer Falten-oder Rissbildung der Folie weiter reduziert.

In bevorzugter Ausführung der Erfindung bildet die Formtrennungsfläche der folienzugewandten Halbform im Innenbereich einen Kragen, der schräg zu der Formtrennungsebene angestellt ist. Der Kragen bildet dabei eine im Querschnitt gerade Schräge mit einem entlang des Gradienten konstanten Anstellwinkel.

Durch den schrägen Wandverlauf bildet der Kragen der folienzugewandten Halbform eine trichterartige Struktur, die sich zur Ausformseite hin verjüngt. Ausformseitig bildet die Formtrennungsfläche im Bereich des Kragens also eine konkave Form. Die einspritzseitige Formtrennungsfläche ist bevorzugt komplementär hierzu gestaltet. Die Formtrennungsfläche der folienabgewandten Halbform bildet somit im Bereich des Kragens eine konvexe Struktur. Dank des schrägen Kragens gehen die Formtrennungsflächen ausformseitig am Innenrand des Kragens durchwegs über stumpfe Winkel in die Wand der Kavität über. Scharfe und ausgeprägte Kanten sind somit am Innenrand der ausformseitigen Formtrennungsfläche vermieden. Hierdurch wird auch die Folie am Innenrand der Formtrennungsfläche vergleichsweise wenig geknickt und entsprechend gering beansprucht. Zudem kann die Folie durch die reduzierte Kantenausprägung am Innenrand der Formtrennungsflächen in diesem Bereich besser "arbeiten". Insbesondere kann sich die Folie besser über die der Kavität zugeordnete Fläche hinaus dehnen und so punktuelle Spannungsspitzen besser ausgleichen. Durch diese Effekte wird das Risiko einer Falten- oder Rissbildung der Folie wesentlich verringert, wodurch auch Kunststoffteile mit vergleichsweise stark konturierter Sichtfläche im IMD-Verfahren dekorierbar sind.

Durch die erfindungsgemäße Formgestaltung entsteht allerdings im Vergleich zu herkömmlichen IMD-Formen ein erhöhter Folienverbrauch, zumal die Folie auch im Innenbereich der Formtrennflächen verstreckt wird und somit als Ausschuss anfällt. Dieser Folienmehrverbrauch fällt umso mehr ins Gewicht, je breiter der Innenbereich gestaltet ist. Um einerseits die Vorteile der erfindungsgemäßen Formgestaltung effektiv auszunutzen, andererseits aber den Folienmehrverbrauch in vertretbaren Grenzen zu halten, hat es sich als besonders vorteilhaft erwiesen, das Verhältnis der vom Außenrand des Innenbereichs umschlossene Fläche zu der vom Innenrand des Innenbereichs umschlossenen Fläche, d.h. zu der Querschnittsfläche der Kavität, zwischen etwa 1,75 und 4 zu wählen.

Bei Ausführungen der Form, bei denen der Innenbereich der Formtrennungsflächen durch einen schräg angestellten Kragen gebildet ist, hat es sich aus den gleichen Gründen weiterhin als besonders vorteilhaft erwiesen, den Anstellwinkel des Kragens gegenüber der Formtrennungsebene zwischen 10° und 40° zu wählen.

Um bei einem möglichst kleinen Folienverbrauch eine optimale Anpassung der Verstreckungseigenschaften der Folie an die komplexe Geometrie des herzustellenden Kunststoffteils zu erreichen, variiert gemäß einer weiteren bevorzugten Ausgestaltung der Betrag des Anstellwinkels um den Umfang des Kragens herum. Der Betrag des Anstellwinkels ist also bei ein- und demselben Kunststoffteil in Abhängigkeit von der Geometrie der Kavität an unterschiedlichen Stellen um den Umfang des Kragens in der Regel unterschiedlich gewählt. Ebenso variiert in der Regel der Abstand zwischen dem Außenrand und dem Innenrand des Innenbereichs bzw. Kragens um den Umfang der Kavität.

Zum Ausbilden von Fenstern oder von Vertiefungen im Material des Kunststoffteils sind in der Regel ausformseitig in der Kavität ein oder mehrere Vorsprünge (z.B. in Form von sogenannten Kemstiften) angeordnet. Diese Vorsprünge können fest mit der Halbform verbundene Erhebungen am Grund der Kavität sein. Bei diesen Vorsprüngen kann es sich aber auch um Formstempel handeln, die gegenüber der Halbform beweglich sind. Sofern die ausformseitige Halbform mindestens einen solchen Vorsprung aufweist, ist der Innenbereich der ausformseitigen Formtrennungsfläche gegenüber dem Außenbereich bevorzugt derart zurückversetzt bzw. zurückversetzbar, dass die vom Außenbereich umschlossene Fläche von dem Vorsprung nicht durchsetzt wird. Mit anderen Worten ist also die Höhe des Außenrandes des Innenbereichs gegenüber dem Grund der ausformseitigen Wand der Kavität derart dimensioniert, dass sie die - gegenüber demselben Bezugspunkt gemessene - Höhe des oder jeden Vorsprungs überschreitet. Durch dieses Gestaltungsmerkmal wird der Effekt erzielt, dass die zwischen Halbformen eingelegte Folie zunächst nicht auf dem Vorsprung aufliegt, so dass in diesem Bereich ebenfalls keine Wärmeableitung von der Folie an die Form stattfindet, und eine gleichmäßige Verstreckung der Folie gewährleistet ist.

Vorzugsweise weist die Spritzgussvorrichtung zusätzlich Mittel zum Einspannen der IMD-Folie, insbesondere einen Klemmrahmen auf. Diese Mittel sind hierbei im Außenbereich der Formtrennungsflächen angeordnet, während entsprechende Mittel im Innenbereich (insbesondere im Bereich des gegebenenfalls vorhandenen Kragens) fehlen. Dank der Anordnung der Klemmmittel im Außenbereich kann die Folie sich über den gesamten Innenbereich der Formtrennungsflächen uneingeschränkt dehnen.

Ein Ausführungsbeispiel der Erfindung wird anhand einer Zeichnung näher erläutert. Hierin zeigen:
- Fig. 1: im Querschnitt eine erfindungsgemäße IMD-Form in einer offenen Stellung,
- Fig. 2: in Darstellung gemäß Fig. 1 die dortige IMD-Form in einer geschlossenen Stellung.
- Fig. 3: in Darstellung gemäß Fig. 1 eine ausformseitige Halbform einer herkömmlichen IMD-Form.
- Fig. 4: in Darstellung gemäß Fig. 1 die ausformseitige Halbform der dortigen IMD-Form.
- Fig. 5: in Draufsicht die ausformseitige Halbform der IMD-Form gemäß Fig. 1.
- Fig. 6: in Darstellung gemäß Fig. 1 die ausformseitige Halbform einer zweiten Ausführung der erfindungsgemäßen IMD-Form,
- Fig. 7 und 8: in Darstellung gemäß Fig. 1 eine weitere Ausführung der erfindungsgemäßen IMD-Form in der offenen bzw. geschlossenen Stellung.

In den Figuren sind gleich wirkende Teile mit den gleichen Bezugszeichen versechen.

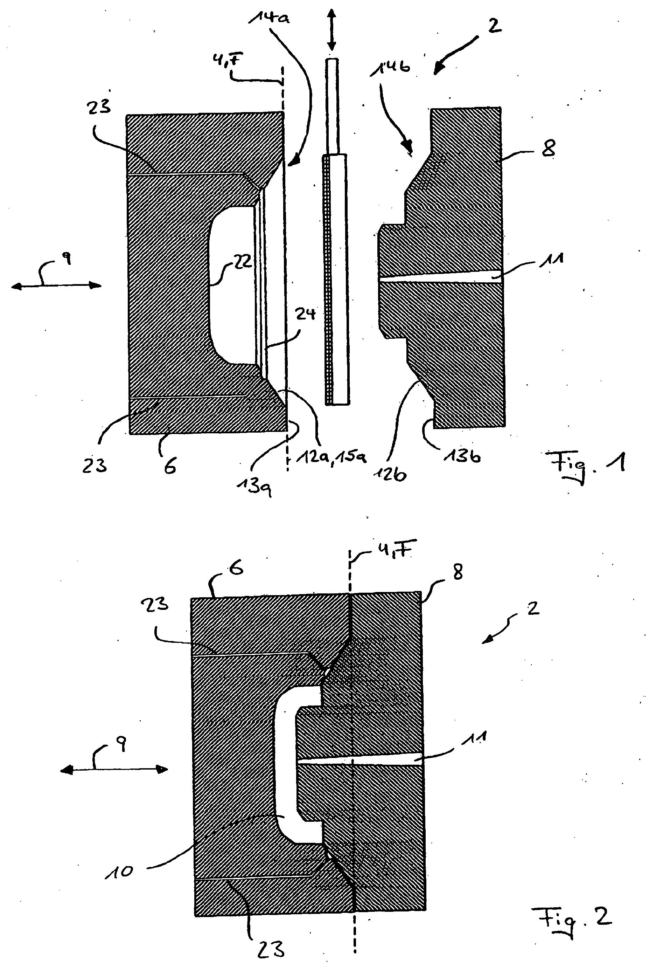

In den Figuren 1 und 2 ist eine IMD (In-Mold-Decoration)-Form 2 einer nicht näher gezeigten Spritzgussvorrichtung in einer offenen Stellung bzw. einer geschlossenen Stellung gezeigt. Mittels der IMD-Form 2 wird ein Kunststoffteil hergestellt, dessen Sichtfläche mit einer Dekorationslackschicht versehen ist. Die Aufbringung der Lackschicht erfolgt über die In-Mold-Decoration-Technik mittels einer Trägerfolie, auf der die Lackschicht aufgebracht ist. Die Trägerfolie bildet zusammen mit der Lackschicht eine dehnbare Folie 4, die in der offenen Stellung der IMD-Form 2 vor einer ausformseitigen Halbform 6 der Form 2 eingelegt wird. Bei der Folie 4 handelt es sich in der bevorzugten Ausführungsform um eine "Endlosfolie", d.h. um Rollenmaterial, das im Laufe einer Vielzahl von Spritzgussvorgängen sukzessive abgewickelt wird. Die Folie 4 wird dabei über eine nicht näher gezeigte Transportvorrichtung durch die Form 2 geführt.

Zum Erzeugen des Kunststoffteils werden die ausformseitige Halbform 6 und eine einspritzseitige Halbform 8 in einer Verfahrrichtung 9 relativ zueinander verfahren und dabei in die geschlossene Stellung gemäß Fig. 2 gebracht. In der geschlossenen Stellung ist zwischen den Halbformen 6, 8 eine Kavität 10 gebildet, welche die Form des Kunststoffteils definiert. Nach dem Schließen der Form 2 wird die Folie 4 von einem Spritzgussmaterial, welches über einen Einspritzkanal 11 in die Kavität 10 eingespritzt wird, gegen die ausformseitigen Halbform 6 gepresst. Die Halbform 6 ist daher auch als "folienzugewandte Halbform" bezeichnet, während die Halbform 8 auch als "folienabgewandte Halbform" bezeichnet ist.

In der Umgebung der Kavität 10 sind sowohl an der ausformseitigen Halbform 6 als auch an der einspritzseitigen Halbform 8 Formtrennungsflächen 14a bzw. 14b vorgesehen, mit denen die Halbformen 6 und 8 in der geschlossenen Stellung aneinander anliegen.

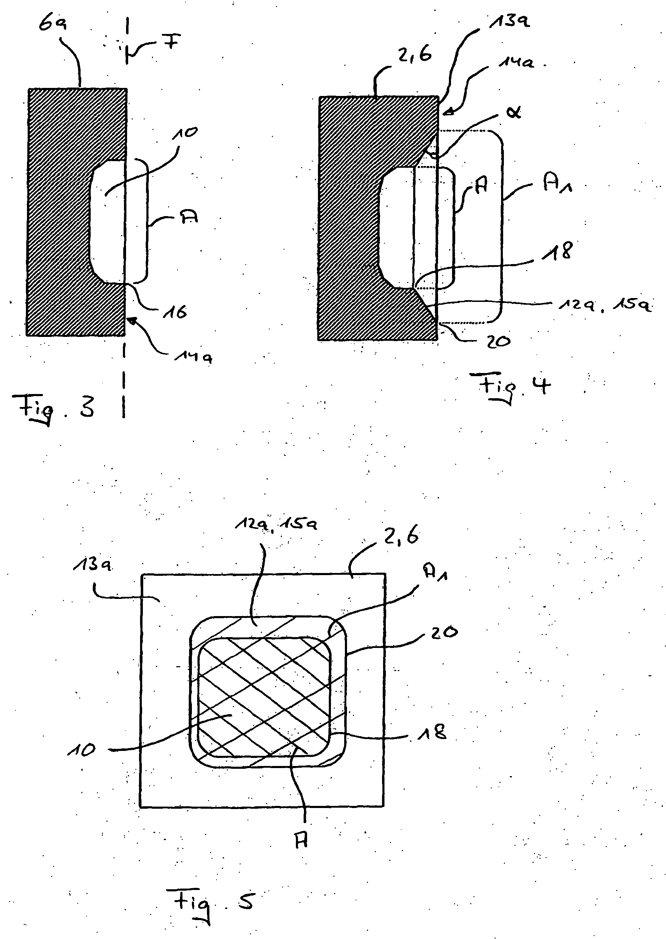

In Fig. 3 ist eine ausformseitige Halbform 6a einer herkömmlichen IMD-Form dargestellt, bei der die zugehörige Formtrennungsfläche 14a in einer (hier flachen d.h. ungekrümmten) Formtrennungsebene F liegt. Ein innerer Rand 16 der Formtrennungsfläche 14a umschließt eine Fläche A, deren Querschnitt im Wesentlichen dem Querschnitt der Kavität 10 entspricht.

Im Gegensatz dazu umfassen die Formtrennungsflächen 14a und 14b der erfindungsgemäßen IMD-Form 2 an beiden Halbformen 6, 8 jeweils einen die Kavität 10 direkt umgebenden Innenbereich 12a bzw. 12b und einen diesen wiederum umgebenden Außenbereich 13a, 13b. Der Außenbereich 13a, 13b definiert hierbei durch die dortige Ausrichtung der Formtrennflächen 14a und 14b die Formtrennebene F, die im dargestellten Beispiel wiederum flach und senkrecht zur Verfahrrichtung 9 ausgerichtet ist. Die Formtrennebene F kann abweichend hier-von aber auch schräg zur Verfahrrichtung 9 ausgerichtet und/oder eindimensional. d.h. ähnlich einer Zylindermantelfläche in einer Richtung gekrümmt sein, während sie in einer hierauf senkrechten Richtung ungekrümmt ist..

Im Innenbereich 12a, 12b bilden die Formtrennflächen 14a,14b dagegen einen schräg zur Formtrennungsebene F bzw. schräg zum Außenbereich 13a, 13b angestellten Kragen 15a bzw. 15b. Der Kragen 15a der ausformseitigen Halbform 6 bildet somit eine trichterartige Struktur. Wie aus der Seitenansicht gemäß Fig.1 und Fig. 4 ersichtlich, bilden der ausformseitige Kragen 15a eine konkave und der einspritzseitige Kragen 15b eine konvexe Form.

Wie insbesondere aus Fig. 4 ersichtlich ist, schließt der Kragen 15a der ausformseitigen Halbform 6 mit einem Innenrand 18 direkt an die Kavität 10, und mit einem Außenrand 20 an den Außenbereich 13a der Formtrennungsfläche 14a an Der Außenrand 20 umschließt hierbei eine Fläche A₁, während der Innenrand 18 die dem Querschnitt der Kavität 10 entsprechende kleinere Fläche A umschließt. Das Verhältnis der Flächen A₁ und A wird je nach Größe und Konturierung der zu dekorierenden Oberfläche zwischen einem Minimalwert von etwa 1,75 und einem Maximalwert von etwa 4 variiert. Bei der dargestellten Form 2 beträgt dieses Verhältnis zum Beispiel etwa 2,3.

Der Anstellwinkel α (Fig. 4) des schrägen Kragens 15a, 15b in Bezug auf die Formtrennungsebene F beträgt zwischen 10° und 40°. Im gezeigten Ausführungsbeispiel ist α = 25°. In der vereinfachten Darstellung der IMD-Form 2 gemäß Figuren 1, 2, 4 und 5 ist der Anstellwinkel α um den Umfang des Kragens 15a, 15b konstant. Möglich sind aber auch Ausführungen des Kragens 15a, 15b, bei denen der Betrag des Anstellwinkels α um den Umfang des Kragens 15a, 15b variiert.

Die Form 2 umfasst außerdem Mittel zum Erzeugen eines Vakuums an einem ausformseitigen Wandbereich 22 der Kavität 10. Diese Mittel sind im Bereich der Halbform 6 durch Vakuumkanäle 23 gebildet, durch welche die Luft in der Kavität 10, insbesondere noch in der offenen Stellung der Form 2, ausgesaugt wird, so dass die dehnungsfähige Folie 4 an den Wandbereich 22 tiefgezogen wird. Die Vakuumkanäle 23 münden hierbei bevorzugt nicht direkt in den Wandbereich 22 der Kavität 10, sondern in den diesen umgebenden Kragen 15a. Die Vakuumkanäle 23 münden hierbei in eine Druckausgleichsnuf 24, die den Innenrand 18 des Kragens 15a mit geringem Abstand ganz oder teilweise umgibt.

Zur besseren Verstreckung der Folie 4 ist im dargestellten Ausführungsbeispiel außerdem eine Heizvorrichtung 25 vorgesehen, die in der offenen Stellung zwischen die Halbformen 6, 8 eingefahren wird. Die Heizvorrichtung 25 kann ein IR-Strahler oder alternativ ein Heißluftgebläse sein.

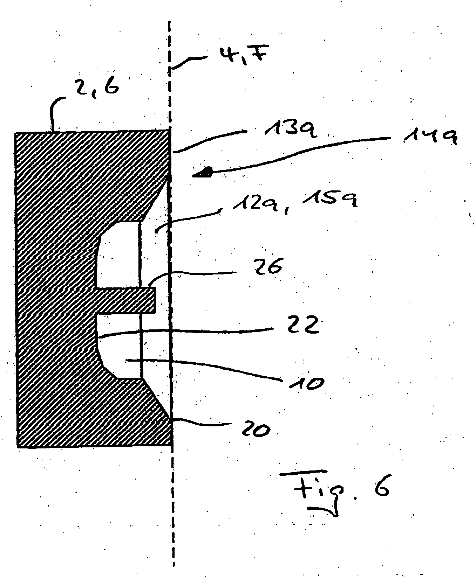

Bei einer in Fig. 6 dargestellten Ausführungsform der Form 2 ist an dem Wandbereich 22 der Kavität 10 ein Vorsprung 26 ausgebildet, mit dessen Hilfe im Kunststoffteil ein Fenster erzeugt wird. Der Kragen 15a, 15b ist hierbei derart dimensioniert, dass der Vorsprung 26 die durch den Außenrand 20 des Kragens 15a begrenzte Fläche A₁ nicht durchstößt, und somit auch die Folie 4 beim Einlegen nicht berührt.

Die Herstellung des Kunststoffteils erfolgt auf die folgende Weise: Zunächst wird in der offenen Stellung der IMD-Form 2 die Folie 4 eingelegt, mit Hilfe eines nicht dargestellten Klemmrahmens im Außenbereich 13a der Formtrennungsfläche 14a eingespannt und mittels der Heizvorrichtung 25 erhitzt (siehe Fig. 1). Anschließend wird über die Vakuumkanäle 23 ein Vakuum zwischen der Folie 4 und dem ausformseitigen Wandbereich 22 erzeugt, aufgrund dessen die Folie 4 an diesem Wandbereich 22 angezogen wird. Bei diesem Tiefziehprozess wird die Folie 4 in dem gesamten Flächenbereich, mit dem sie an dem Wandbereich 22 sowie an dem Kragen 15a anliegt, zumindest annähernd gleichmäßig verstreckt.

Nach dem Schließen der IMD-Form 2 (siehe Fig. 2) wird über den Einspritzkanal 11 das Spritzgussmaterial in die kavität 10 eingespritzt und so das Kunststoffteil geformt. Nach dem Erstarren der Spritzgussmasse wird die IMD-Form 2 wieder geöffnet. Das Kunststoffteil wird aus der geöffneten IMD-Form 2 entfernt (ausgeformt), wobei die Trägerschicht der Folie 4 abgezogen wird. Die Trägerschicht selbst bleibt beim Spritzgussvorgang unbeschädigt. Insbesondere wird die Trägerschicht beim Spritzgussvorgang nicht gestanzt oder geschnitten. Mittels der Transportvorrichtung wird schließlich ein neuer, intakter Teil der als Endlosmaterial vorliegenden Folie 4 in die IMD-Form 2 eingelegt und eingespannt, worauf der Herstellungsvorgang wiederholt wird.

Bei der oben beschriebenen IMD-Form 2 wird eine effektive Verstreckung der Folie 4 (dekorierte Teilfläche, d.h. Fläche des Wandbereichs 22, geteilt durch den Querschnitt der Kavität 10) erzielt, die die lokale Verstreckung der Folie 4 (Dehnung der Folie 4 pro Flächeneinheit) wesentlich übersteigt. Insbesondere lässt sich eine effektive Verstreckung von über 100% erreichen, ohne dass die Folie 4 reißt oder Falten zieht.

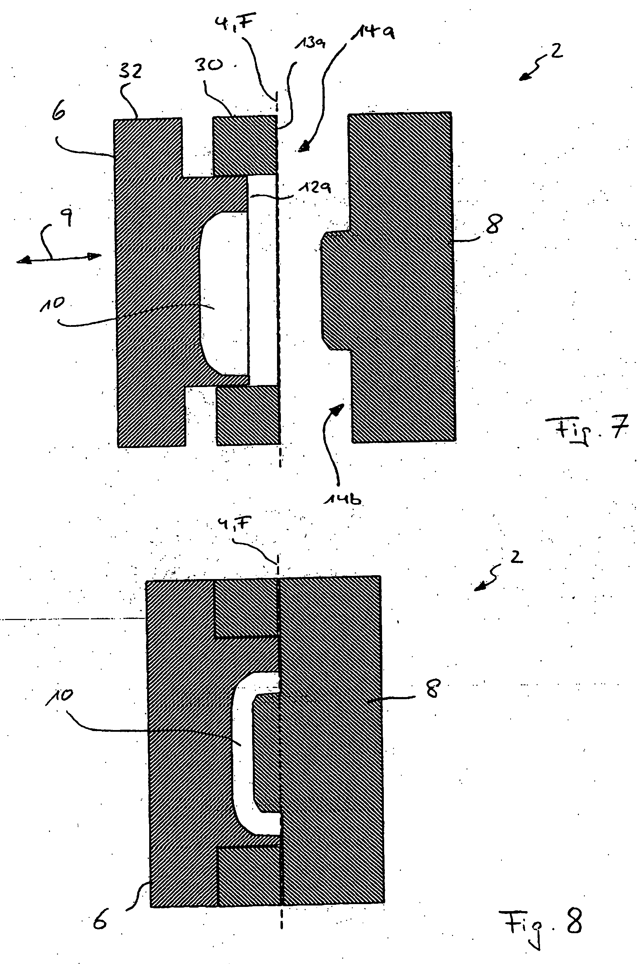

Eine weitere Ausführung der erfindungsgemäßen Form 2 ist in den Figuren 7 und 8 dargestellt. Bei dieser Ausführung ist die ausformseitige Halbform 6 aus zwei Teilen 30 und 32 gebildet. An einem ringförmigen äußeren Teil 30 ist hierbei der Außenbereich 13a der Formtrennungsfläche 14a ausgebildet, während der Innenbereich 12a der Formtrennungsfläche 14a sowie der ausformseitige Wandbereich 22 der Kavität 10 an dem zweiten Teil 32 ausgebildet sind. Die beiden Teile 30 und 32 sind derart in Verfahrrichtung 9 gegeneinander verschiebbar, dass in der offenen Stellung der Form 2 der Innenbereich 12a gegenüber dem Außenbereich 13a zurückversetzt ist, und dass in der geschlossenen Stellung der Form 2 der Innenbereich 12a und der Außenbereich 13a fluchtend in der - auch hier beispielhaft flach dargestellten - Formtrennungsebene F liegen.

### Bezugszeichenliste

- 2: IMD-Form
- 4: Folie
- 6: (ausformseitige) Halbform
- 6a: (ausformseitige) Halbform
- 8: (einspritzseitige) Halbform
- 9: Verfahrrichtung
- 10: Kavität
- 11: Einspritzkanal
- 12a,12b: Innenbereich
- 13a, 13b: Außenbereich
- 14a,14b: Formtrennungsflächen
- 15a,15b: Kragen
- 16: Rand
- 18: Innenrand
- 20: Außenrand
- 22: Wandbereich
- 23: Vakuumkanal
- 24: Druckausgleichsnut
- 25: Heizvorrichtung
- 26: Vorsprung
- 30: Teil
- 32: Teil

- A,A₁: Fläche
- α: Winkel

## Patentansprüche

1. IMD-Form (2) zur Herstellung eines foliendekorierten Kunststoffteils, umfassend eine folienzugewandte Halbform (6) sowie eine folienabgewandte Halbform (8), wobei die beiden Halbformen mit korrespondierenden Formtrennungsflächen (14a,14b) derart aneinander anlegbar sind, dass sie zwischen sich eine im Wesentlichen nach außen abgeschlossene Kavität (10) bilden, wobei die Formtrennungsfläche (14a) der folienzugewandten Halbform (6) durch einen die Kavität (10) umgebenden Innenbereich (12a) und einen diesen wiederum umgebenden Außenbereich (13a) gebildet ist, wobei der Außenbereich (13a) in einer zumindest im Wesentlichen flachen oder eindimensional gekrümmten Formtrennungsebene (F) liegt, wobei die eindimensional gekrümmte Formtrennungsebene (F) eine in einer Richtung gekrümmte und in einer hierauf senkrechten Richtung ungekrümmte Fläche ist, und wobei der Innenbereich (12a) gegenüber der Formtrennungsebene (F) zurückversetzt ist,
**dadurch gekennzeichnet,**
**dass** die Formtrennungsfläche (14a) der folienzugewandten Halbform (6) im Innenbereich (12a) einen im Querschnitt schräg-gerade zur Formtrennungsebene (F) angestellten Kragen (15a) bildet, dessen Innenrand stumpfwinklig in die Wand (22) der Kavität (10) übergeht.

2. IMD-Form (2) nach Anspruch 1,
**dadurch gekennzeichnet,**
**dass** der Kragen (15a) gegenüber der Formtrennungsebene (F) einen Anstellwinkel (α) von zwischen 10° und 40° aufweist.

3. IMD-Form (2) nach Anspruch 1 oder 2,
**dadurch gekennzeichnet,**
**dass** der Betrag des Anstellwinkels (α) um den Umfang des Kragens (15a) herum variiert.

4. IMD-Form (2) zur Herstellung eines foliendekorierten Kunststoffteils, umfassend eine folienzugewandte Halbform (6) sowie eine folienabgewandte Halbform (8), wobei die beiden Halbformen mit korrespondierenden Formtrennungsflächen (14a,14b) derart aneinander anlegbar sind, dass sie zwischen sich eine im Wesentlichen nach außen abgeschlossene Kavität (10) bilden, wobei die Formtrennungsfläche (14a) der folienzugewandten Halbform (6) durch einen die Kavität (10) umgebenden Innenbereich (12a) und einen diesen wiederum umgebenden Außenbereich (13a) gebildet ist, wobei der Außenbereich (13a) in einer zumindest im Wesentlichen flachen oder eindimensional gekrümmten Formtrennungsebene (F) liegt, wobei die eindimensional gekrümmte Formtrennungsebene (F) eine in einer Richtung gekrümmte und in einer hierauf senkrechten Richtung ungekrümmte Fläche ist, wobei die folienzugewandte Halbform (6) zwei Teile (30,32) umfasst, von denen ein erstes Teil (32) den Innenbereich (12a) der Formtrennungsfläche (14a) trägt, und von denen ein zweites Teil (30) den Außenbereich (13a) der Formtrennungsfläche (14a) trägt, wobei die beiden Teile (30,32) gegeneinander verschiebbar sind, so dass der Innenbereich (12a) gegenüber der Formtrennungsebene (F) zurückversetzbar ist.

5. IMD-Form (2) nach einem der vorhergehenden Ansprüche,
**dadurch gekennzeichnet,**
**dass** das Verhältnis zwischen der vom Außenrand (20) des Innenbereichs (12a) umschlossenen Fläche (A₁) zu der vom Rand (18) der Kavität (10) umschlossenen Fläche (A) zwischen 1,75 und 4 liegt.

6. IMD-Form (2) nach einem der vorhergehenden Ansprüche,
**dadurch gekennzeichnet,**
**dass** die folienzugewandte Halbform (6) Mittel zum Erzeugen eines Unterdrucks an dem zugeordneten Wandbereich (22) der Kavität (10) aufweist.

7. IMD-Form (2) nach Anspruch 6,
**dadurch gekennzeichnet,**
**dass** als Mittel zur Erzeugung des Unterdrucks im Innenbereich (12a) der Formtrennungsfläche (14a) der folienzugewandten Halbform (6) eine die Kavität (10) ganz oder teilweise umlaufende Nut (24) vorgesehen ist, in die mindestens ein Vakuumkanal (23) mündet.

8. IMD-Form (2) nach einem der vorhergehenden Ansprüche,
**dadurch gekennzeichnet,**
**dass** die folienzugewandte Halbform (6) mit einem in die Kavität (10) hineinragenden Vorsprung (26) versehen ist, der die vom Außenbereich (13a) der Formtrennungsfläche (14a) umschlossene Fläche (A₁) nicht durchsetzt.

9. Spritzgussvorrichtung mit einer IMD-Form (2) nach einem der vorhergehenden Ansprüche, mit Mitteln zum Verfahren der Form in einer Verfahrrichtung (9) zwischen einer geschlossenen Stellung und einer offenen Stellung und mit Mitteln zum Einlegen einer IMD-Folie (4) zwischen die Halbformen (6, 8).

10. Spritzgussvorrichtung nach Anspruch 9,
**gekennzeichnet durch**
eine Heizvorrichtung (25), die in der offenen Stellung der Form (2) zwischen die Halbformen (6, 8) verfahrbar ist.

11. Spritzgussvorrichtung nach Anspruch 9 oder 10,
**gekennzeichnet durch**
Mittel zum Einspannen der IMD-Folie (4), die im Außenbereich (13a) der Formtrennungsfläche (14a) der folienzugewandten Halbform (6) angeordnet sind.

12. Verfahren zur Herstellung eines foliendekorierten Kunststoffteils,
**dadurch gekennzeichnet,**
**dass** eine Spritzgussvorrichtung nach einem der Ansprüche 9 bis 11 verwendet wird.

13. Verfahren nach Anspruch 12,
**dadurch gekennzeichnet,**
**dass** vor dem Schließen der IMD-Form (2) die IMD-Folie (4) im Bereich zwischen den Halbformen (6, 8) beheizt wird.

14. Verfahren nach Anspruch 12 oder 13,
**dadurch gekennzeichnet,**
**dass** zwischen der folienzugewandten Halbform (6) und der IMD-Folie (4) ein Unterdruck zum Ziehen der zwischen den Halbformen (6, 8) eingelegten IMD-Folie (4) an den zugehörigen Wandbereich (22) der Kavität (10) erzeugt wird.

## Claims

1. IMD mould (2) for the production of a film-decorated plastic part, comprising a mould half (6) which faces towards the film as well as a mould half (8) which faces away from the film, wherein the two mould halves are able to abut onto each other with corresponding mould parting surfaces (14a, 14b) in such a way that they form a cavity (10) between them which is closed substantially outwardly, wherein the mould parting surface (14a) of the mould half (6) which faces towards the film is formed by an inner region (12a) which surrounds the cavity (10) and an outer region (13a) which in turn surrounds this, wherein the outer region (13a) lies in an at least substantially flat or one-dimensionally curved mould parting plane (F), wherein the one-dimensionally curved mould parting plane (F) is a surface which is curved in one direction and is not curved in a direction which is perpendicular thereto, and wherein the inner region (12a) is set back compared to the mould parting plane (F),
**characterised in that** the mould parting surface (14a) of the mould half (6) which faces towards the film forms a collar (15a) in the inner region (12a) which is engaged in the cross-section straight-angled with respect to the mould parting plane (F), the inner edge of which projects at an obtuse angle into the wall (22) of the cavity (10).

2. IMD mould (2) according to claim 1,
**characterised in that**
the collar (15a) has a pitch angle (α) of between 10° and 40° with respect to the mould parting plane (F).

3. IMD mould (2) according to claim 1 or 2,
**characterised in that**
the value of the pitch angle (α) varies around the periphery of the collar (15a).

4. IMD mould (2) for the production of a film-decorated plastic part comprising a mould half (6) which faces towards the film as well as a mould half (8) which faces away from the film, wherein the two mould halves are able to abut onto each other with corresponding mould parting surfaces (14a, 14b) in such a way that they form a cavity between them which is closed substantially outwardly, wherein the mould parting surface (14a) of the mould half (6) which faces towards the film is formed by an inner region (12a) which surrounds the cavity (10) and an outer region (13a) which in turn surrounds this, wherein the outer region (13a) lies in an at least substantially flat or one-dimensionally curved mould parting plane (F), wherein the one-dimensionally curved mould parting plane (F) is a surface which is curved in one direction and not curved in a direction which is perpendicular to this, wherein
the mould half (6) which faces towards the film comprises two parts (30, 32), of which a first part (32) bears the inner region (12a) of the mould parting surface (14a), and of which a second part (30) bears the outer region (13a) of the mould parting surface (14a), wherein the two parts (30, 32) are able to be displaced against each other such that the inner region (12a) is able to be set back compared to the mould parting plane (F).

5. IMD mould (2) according to one of the preceding claims,
**characterised in that**
the ratio between the surface (A₁) which is surrounded by the outer edge (20) of the inner region (12a) to the surface (A) which is surrounded by the edge (18) of the cavity (10) lies between 1.75 and 4.

6. IMD mould (2) according to one of the preceding claims,
**characterised in that**
the mould half (6) which faces towards the film has means to generate a vacuum on the allocated wall region (22) of the cavity (10).

7. IMD mould (2) according to claim 6,
**characterised in that**
a groove (24) which completely or partially circulates the cavity (10) is provided as a means to generate the vacuum in the inner region (12a) of the mould parting surface (14a) of the mould half (6) which faces towards the film, into which groove (10) at least one vacuum channel (23) flows.

8. IMD mould (2) according to one of the preceding claims,
**characterised in that**
the mould half (6) which faces towards the film is provided with a protrusion (26) which projects into the cavity (10) and which does not penetrate the surface (A₁) which is surrounded by the outer region (13a) of the mould parting surface (14a).

9. Injection moulding device having an IMD mould (2) according to one of the preceding claims, having means to move the mould in a movement direction (9) between a closed position and an open position and having means to insert an IMD film (4) between the mould halves (6, 8).

10. Injection moulding device according to claim 9,
**characterised by**
a heating device (25) which is able to be moved between the mould halves (6, 8) in the open position of the mould (2).

11. Injection moulding device according to claim 9 or 10,
**characterised by**
means to clamp the IMD film (4) which are arranged in the outer region (13a) of the mould parting surface (14a) of the mould half (6) facing towards the film.

12. Method for the production of a film-decorated plastic part,
**characterised in that**
an injection moulding device according to one of claims 9 to 11 is provided.

13. Method according to claim 12,
**characterised in that**
the IMD film (4) is heated in the region between the mould halves (6, 8) before closing the IMD mould (2).

14. Method according to claim 12 or 13,
**characterised in that**
a vacuum is generated on the allocated wall region (22) of the cavity (10) to pull the IMD film (4) inserted between the mould halves (6, 8) between the mould half (6) which faces towards the film and the IMD film (4).

## Revendications

1. Moule (2) pour la technique de moulage IMD (décoration dans le moule) pour la fabrication d'une pièce de matière plastique décorée par une feuille, comprenant un demi-moule (6) situé du côté de la feuille et un demi-moule (8) à l'opposé de la feuille, moule dans lequel les deux demi-moules peuvent être appliqués l'un contre l'autre avec des surfaces de plan de joint de moule correspondantes (14a, 14b), de manière à former entre eux une cavité (10) sensiblement fermée à l'encontre de l'extérieur,
dans lequel la surface de plan de joint de moule (14a) du demi-moule (6) situé du côté de la feuille est formée par une zone intérieure (12a) entourant la cavité (10) et par une zone extérieure (13a) entourant pour sa part ladite zone intérieure,
dans lequel la zone extérieure (13a) se situe dans un plan de joint de moule (F) sensiblement plat ou courbé selon une dimension,
dans lequel le plan de joint de moule (F) courbé selon une dimension est une surface courbe dans une direction et non courbe dans une direction perpendiculaire,
et dans lequel la zone intérieure (12a) est décalée en retrait par rapport au plan de joint de moule (F),
**caractérisé**
**en ce que** la surface de plan de joint de moule (14a) du demi-moule (6) situé du côté de la feuille forme, au niveau de la zone intérieure (12a), une collerette (15a) ayant, en section transversale, une incidence inclinée rectiligne par rapport au plan de joint de moule (F), et dont la transition du bord intérieur à la paroi (22) de la cavité (10) se fait selon un angle obtus.

2. Moule (2) pour la technique de moulage IMD selon la revendication 1,
**caractérisé**
**en ce que** la collerette (15a) présente par rapport au plan de joint de moule (F), un angle d'incidence (α) entre 10° et 40°.

3. Moule (2) pour la technique de moulage IMD selon la revendication 1 ou la revendication 2,
**caractérisé**
**en ce que** la valeur de l'angle d'incidence (α) varie autour de la périphérie de la collerette (15a).

4. Moule (2) pour la technique de moulage IMD (décoration dans le moule) pour la fabrication d'une pièce de matière plastique décorée par une feuille, comprenant un demi-moule (6) situé du côté de la feuille et un demi-moule (8) à l'opposé de la feuille, moule dans lequel les deux demi-moules peuvent être appliqués l'un contre l'autre avec des surfaces de plan de joint de moule correspondantes (14a, 14b), de manière à former entre eux une cavité (10) sensiblement fermée à l'encontre de l'extérieur,
dans lequel la surface de plan de joint de moule (14a) du demi-moule (6) situé du côté de la feuille est formée par une zone intérieure (12a) entourant la cavité (10) et par une zone extérieure (13a) entourant pour sa part ladite zone intérieure,
dans lequel la zone extérieure (13a) se situe dans un plan de joint de moule (F) sensiblement plat ou courbé selon une dimension,
dans lequel le plan de joint de moule (F) courbé selon une dimension est une surface courbe dans une direction et non courbe dans une direction perpendiculaire,
dans lequel le demi-moule (6) situé du côté de la feuille comprend deux parties (30, 32) dont une première partie (32) porte la zone intérieure (12a) de la surface de plan de joint (14a), et dont une deuxième partie (30) porte la zone extérieure (13a) de la surface de plan de joint de moule (14a), les deux parties (30, 32) pouvant coulisser l'une par rapport à l'autre de sorte que la zone intérieure (12a) peut être déplacée en retrait par rapport au plan de joint de moule (F).

5. Moule (2) pour la technique de moulage IMD selon l'une des revendications précédentes,
**caractérisé**
**en ce que** le rapport de la surface (A₁) entourée par le bord extérieur (20) de la zone intérieure (12a) à la surface (A) entourée par le bord (18) de la cavité (10), se situe entre 1,75 et 4.

6. Moule (2) pour la technique de moulage IMD selon l'une des revendications précédentes,
**caractérisé**
**en ce que** le demi-moule (6) situé du côté de la feuille comporte des moyens pour produire une dépression au niveau de la zone de paroi (22) associée, de la cavité (10).

7. Moule (2) pour la technique de moulage IMD selon la revendication 6,
**caractérisé**
**en ce que** concernant les moyens pour produire la dépression dans la zone intérieure (12a) de la surface de plan de joint de moule (14a) du demi-moule (6) situé du côté de la feuille, il est prévu une rainure (24) entourant totalement ou partiellement la cavité (10) et dans laquelle débouche au moins un canal de vide (23).

8. Moule (2) pour la technique de moulage IMD selon l'une des revendications précédentes,
**caractérisé**
**en ce que** le demi-moule (6) situé du côté de la feuille est muni d'une protubérance (26) s'engageant dans la cavité (10) et ne traversant pas la surface (A₁) entourée par la zone extérieure (13a) de la surface de plan de joint de moule (14a).

9. Dispositif de moulage par injection comprenant un moule (2) pour la technique de moulage IMD selon l'une des revendications précédentes, et comprenant des moyens pour déplacer le moule dans une direction de déplacement (9), entre une position fermée et une position ouverte, et des moyens pour insérer une feuille de moulage IMD (4) entre les demi-moules (6, 8).

10. Dispositif de moulage par injection selon la revendication 9,
**caractérisé**
**par** un dispositif chauffant (25), qui peut être déplacé entre les demi-moules (6, 8), dans la position ouverte du moule (2).

11. Dispositif de moulage par injection selon la revendication 9 ou la revendication 10,
**caractérisé**
**par** des moyens pour enserrer la feuille de moulage IMD (4), qui sont agencés dans la zone extérieure (13a) de la surface de plan de joint de moule (14a) du demi-moule (6) situé du côté de la feuille.

12. Procédé pour la fabrication d'une pièce de matière plastique décorée par une feuille,
**caractérisé**
**en ce que** l'on utilise un dispositif de moulage par injection selon l'une des revendication 9 à 11.

13. Procédé selon la revendication 12,
**caractérisé**
**en ce qu'**avant la fermeture du moule (2) pour la technique de moulage IMD, on chauffe la feuille de moulage IMD (4) dans la zone entre les demi-moules (6, 8).

14. Procédé selon la revendication 12 ou la revendication 13,
**caractérisé**
**en ce que** l'on produit une dépression entre le demi-moule (6) situé du côté de la feuille et la feuille de moulage IMD (4), en vue de tirer la feuille de moulage IMD (4) placée entre les demi-moules (6, 8) contre la zone de paroi (22) associée, de la cavité (10).
